# EUROPEAN PATENT APPLICATION

(11) **EP 3 024 195 A1**
(43) Date of publication of application: **25.05.2016**
(21) Application number: 14306858.3
(22) Date of filing: 24.11.2014
(51) Int. Cl.: H04L 29/06, H04L 12/18, H04N 7/15

(54) **Method and devices for multimedia conferencing**

(71) Applicant: ALCATEL LUCENT, 92100 Boulogne-Billancourt (FR)
(72) Inventor: Rajagopalan, Ramakrishnan, 60096 Chennai (IN); Karunamurthy, Jagannath, 600096 Chennai (IN); Thiagarajan, Asha, 600096 Chennai (IN)
(74) Representative: ALU Antw Patent Attorneys

(57) **Abstract**

A Multimedia conferencing method between a multimedia conferencing server (S) and a plurality of conferencing clients (VCC1,...,VCCn), said method comprises the steps of
- setting up a video conferencing session between said conferencing server (S) and said plurality of conferencing clients (VCC1, VCC2, ...,VCCn)
- measuring the bandwidth (B1i, B2i, ...,Bni) of the respective connections (C1,C2, ...,Cn) between the conferencing server (S) and the respective conferencing clients (VCC1, VCC2, ...,VCCn),
- comparing the respective measured bandwidths (B1i, B2i, ...,Bni) between the respective conferencing clients (VCC1, VCC2, ..., VCCn) and said conferencing server (S) with first and second predetermined limits (L1, L2), with said second predetermined limit (L2) being higher than the first predetermined limit, such that
- if, for a conferencing client (VCC2) the respective measured bandwidth (B2i) is lower than said first predetermined limit (L1), the video conferencing session between said conferencing client (VCC2) and said conferencing server is interrupted,
- if, for a conferencing client (VCC2) the respective measured bandwidth (B2i) is higher than said second predetermined limit (L2), the video conferencing session between said conferencing client (VCC2) and said conferencing server is maintained or re-established and ,
- if for a conferencing client (VCC2) the measured respective bandwidth (B2i) is lying between said predetermined limits, said conferencing client (VCC2) will only transmit a still image taken from the captured video stream (V2) at said video conferencing client together with audio to said conferencing server (S).

## Description

The present invention relates to a method and devices for multimedia conferencing.

In present video-conferencing systems , comprising a video conferencing server and a plurality of video conferencing clients, a sudden drop in the bandwidth of the connection between a video conferencing client and the video conferencing server, may cause serious problems of degraded quality, delays and even call disconnection.

The problem of disconnection may be solved by switching from a video conference to audio conference only for this specific client of which the connection became bad.

A drawback of this solution is that from the moment on of switching from video to audio, this particular client has no further idea of what is further happening, except via the received audio inputs from the other participants. Moreover the other participants will at their turn, also only receive voice input from the particular affected participant.

This can sometimes be problematic as visual information may enrich a communication, which is exactly the aim of a videoconference.

It is therefore an object of embodiments of the present invention to provide a method and a multimedia conferencing system which solve the aforementioned problems.

According to embodiments of the invention this object is achieved by the provision of a multimedia conferencing method between a multimedia conferencing server and a plurality of conferencing clients, said method comprising the steps of
- setting up a video conferencing session between said conferencing server and said plurality of conferencing clients,
- measuring the bandwidth of the respective connections between the conferencing server and the respective conferencing clients,
- comparing the respective measured bandwidths between the respective conferencing clients and said conferencing server with first and second predetermined limits , with said second predetermined limit being higher than the first predetermined limit, such that
- if, for a conferencing client the respective measured bandwidth at said particular instance in time is lower than said first predetermined limit, the video conferencing session between said conferencing client and said conferencing server is interrupted,
- if, for a conferencing client the respective measured bandwidth at said particular instance in time is higher than said second predetermined limit, the video conferencing session between said conferencing client and said conferencing server is maintained or re-established and ,
- if for a conferencing client the measured respective bandwidth is lying between said predetermined limits, said conferencing client will only transmit a still image taken at said particular instance in time from the captured video stream at said video conferencing client together with audio to said conferencing server.

In an embodiment, the bandwidth of the connections is measured continuously, in another embodiment the bandwidth of the connections is measured , at predetermined sequences in time.

The predetermined instances in time may be such as to create periodic measuring intervals.

In an embodiment the predetermined instances in time can be selected in a random way.

Embodiments of the present invention relate as well to a conferencing server adapted to adapted to
- set up a video conferencing session between said conferencing server and said plurality of conferencing clients,
- receive measurements of the bandwidth of the respective connections between the conferencing server and the respective conferencing clients,
- compare the respective measured bandwidths between the respective conferencing clients and said conferencing server with first and second predetermined limits , with said second predetermined limit being higher than the first predetermined limit, such that
- if, for a conferencing client the respective measured bandwidth is lower than said first predetermined limit, the conferencing server is adapted to interrupt the video conferencing session between said conferencing client and said conferencing server,
- if, for a conferencing client the respective measured bandwidth is higher than said second predetermined limit, the conferencing server is adapted to maintain or re-establish the video conferencing session between said conferencing client and said conferencing server,
- if for a conferencing client the measured respective bandwidth is lying between said predetermined limits, said conferencing server is adapted to instruct said client to only transmit a still image taken from the captured video stream at said conferencing client together with audio to said conferencing server.

The present invention relates as well to a computer program adapted to perform the above mentioned method. Steps of this computer program can be performed on a processing device in a conferencing client, and steps of this computer program can be performed on a processing device in the conferencing server.

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein:
Figs. 1a-c schematically shows the an embodiment of a method
Fig. 2 shows a first embodiment of a multimedia conferencing system,

It is to be remarked that the following merely illustrates the principles of the invention. It will thus be appreciated that those skilled in the art will be able to devise various arrangements that, although not explicitly described or shown herein, embody the principles of the invention and are included within its spirit and scope. Furthermore, all examples and conditional language recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

It is to be remarked that the functions of the various elements shown in the figures., including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be further appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

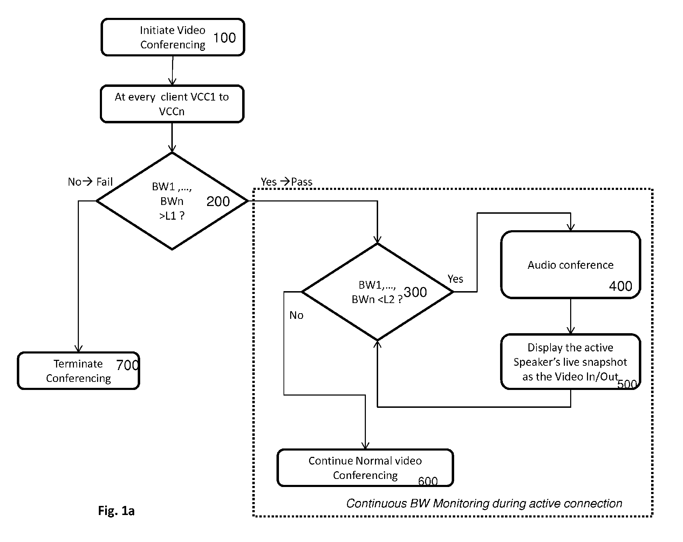

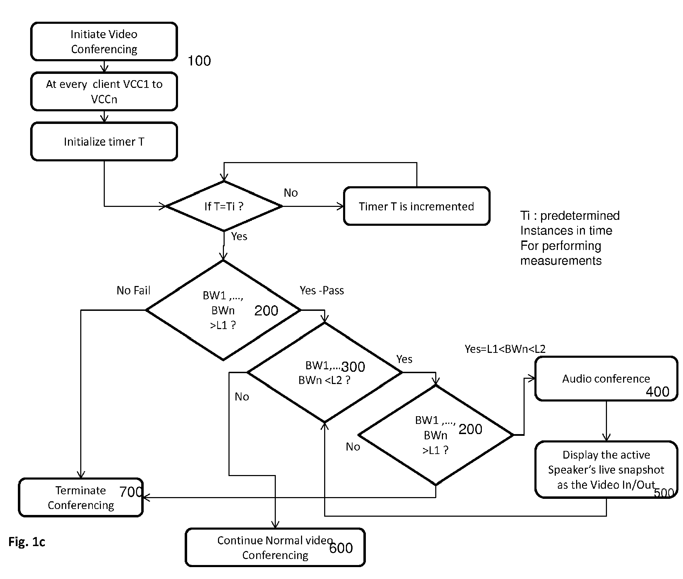

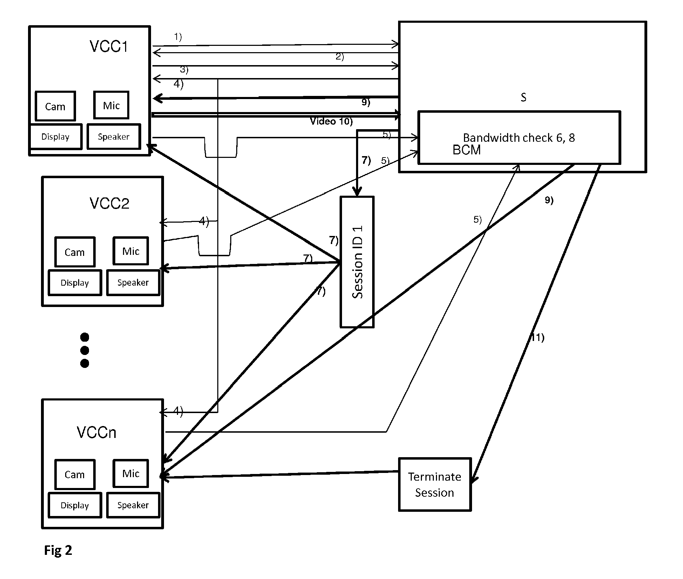

Fig. 1a schematically shows the steps of an embodiment of a multimedia conferencing method, while fig. 2 schematically shows an embodiment of a multimedia conferencing system. With multimedia is meant a combination of video/audio/image/text/ data content or any combination of these. With multimedia conference is meant any combination of video and audio conference possibly accompanied with sharing of text/data/still images between a multimedia conference server, denoted S in fig. 2, and a plurality of multimedia conference clients, denoted VCC1 to VCCn in fig. 2.

Fig. 1a shows that in an initial step 100 the multimedia conference is initiated as a video conference. Fig. 2 will show some further steps for establishing this. This is followed by a check in step 200 of the bandwidth of each connection between each conference client and the server. The bandwidth of conferencing client VCC1 is denoted BW1, that of conferencing client VCC2 is denoted BW2, and that of conferencing client VCCn is denoted BWn. These respective bandwidths are each checked against a first predetermined limit L1, being the minimum limit of this connection for guaranteeing a good audio conferencing taking place. More details about these measurements will be given in a later paragraph.

If the bandwidth for a specific connection is higher than the minimum required value for audio conferencing, a second check is performed in step 300 to check whether this bandwidth is higher than a second threshold value, denoted L2, being the minimum required value for video conferencing. If this is the case, the video conference as was initiated earlier will continue between this specific client and the server as indicated in block or step 600. If not, the video conference between this particular conferencing client and the server is changed into an audio conference in block or step 400, but at the same time a snapshot of the video, being a still image or an image frame taken at that particular instance in time, is provided as the only image input, together with the audio in step 500.

This check of bandwidth values can be performed in a continuous way, as is shown in Fig. 1a. In another embodiment the check of the bandwidth is performed at predetermined instances in time, denoted Ti. A first check may even take place before the video conference is initiated.

These instances in time may be fixed, e.g. every minute , and preferably not longer than 5 minutes , or dependent upon the situation. The check for the bandwidth can be performed at the clients, or alternatively, the clients may measure the bandwidth and provide this to the server, or alternatively the server can measure the respective bandwidth of all respective client connections. Both upstream and downstream bandwidth values are measured, and it is the lowest value of the two which is taken into account for the comparison with the predetermined limits, as will be further mentioned in a further paragraph.

Methods for measuring the bandwidth of such a connection may comprise standard methods, and can be initiated by the Server instructing the Clients to the check the bandwidth of the port used for connection. The bandwidth of the ports (Ethernet, wireless or any other interfaces) used can be monitored by using counters of the client's network ports.

Fig. 2 shows an embodiment of a multimedia conference system, comprising a multimedia conferencing server S, and a number n of multimedia conferencing clients VCC1 to VCCn. In the embodiment of Fig. 2 the conference server S comprises itself a bandwidth check module BCM which will be explained more into detail in a further paragraph. The clients are each equipped with a video camera, denoted cam, a microphone, denoted Mic, a loudspeaker, denoted Speaker, and a display.

The figure further shows different steps used for setting up, maintaining or possibly changing the video conference.

In a first step, denoted by arrow 1, client VCC1 requests the server for a video conference and authentication. The authentication is granted by the server to VCC1 in step 2. Thereupon VCC1 sends in step 3 a list of further participants. In the example depicted in fig. 2 all shown clients are conference participants. In this embodiment the server in step 4 requests the bandwidth information from the clients.

The monitored bandwidth, being the lowest of the downstream and upstream bandwidth measured, is communicated in step 5 by all conference clients to the server, more in particular to the bandwidth check module BCM. For each communicated bandwidth BW1 to BWn, for respective client VCC1 to VCCn, this module next checks in step 6 whether this measured bandwidth lies above an absolute minimum value L1. In a preferred embodiment this value may be a fixed value for all connections. In case the bandwidth check module has identified a connection for which the measured communicated bandwidth was below this first predetermined threshold L1, the associated conference client will not be able to join the conference. This is communicated by the server to this specific conference client. In the embodiment of fig. 2, all connections were OK for this test..

The bandwidth check is performed within BCM itself. The first predetermined threshold L1 is the minimum value required for guaranteeing an audio conference between the clients and the server. This value may have been earlier determined during an initial test procedure of the system, and be stored in BCM.

In a next step 7, the server communicates to all clients a session ID, and joins all clients based on the PASS result obtained in step 6. At this stage this is still only an audio guaranteed conference, so no video conference. This communication of the session ID is shown by the thick arrows from S to the clients, with indication of step 7).

This is followed, in step 8 , by a check of the respective bandwidths BW1 to BWn being larger than L2. This is again performed in the bandwidth check module BCM. If a respective bandwidths are larger than L2 , a change from audio to video conference takes place for the clients for which the bandwidth of their connection to the server is larger than L2. In fig. 2, this is the case for client VCC1, whereas client VCC2 did not meet this criterion. L2 is thus the absolute minimum bandwidth required for a guaranteed video conferencing session to take place. As for L1, this value may have been earlier determined in an initial test procedure of the system, and be stored in BCM. In step 9) the server communicates to VCC1 and VCCn to go from audio to video mode and instructs VCC2 to stay in audio mode, but to provide an image. In order not to overload the drawing this communication from S to VCC2 in in step 9) is not shown. In step 10) VCC1 and VCCn then provide a video signal to the server. Again, in order not to overload the drawing only the video between VCC1 and S is shown.

Bandwidth checks are further performed continuously, in case one client's bandwidth drops below L1, the session between this client and the server is interrupted. This is shown exemplary between S and VCCn in step 11).

For these clients of which the bandwidth is lying between L1 and L2, the audio is augmented with an image taken at that particular instance in time.

The bandwidth check is further performed either continuously, either at regular timing instances, which can be equidistant. In case the bandwidth becomes lower than L1, the client is disconnected. In case the bandwidth remains higher than L2, the video conference is maintained or re-established between this particular client and the server. And in case the bandwidth lies between L1 and L2, only audio is transmitted, together with a snapshot image taken at that particular instance in time, from the client.

These checks are performed until the multimedia conference is finally terminated by all participants.

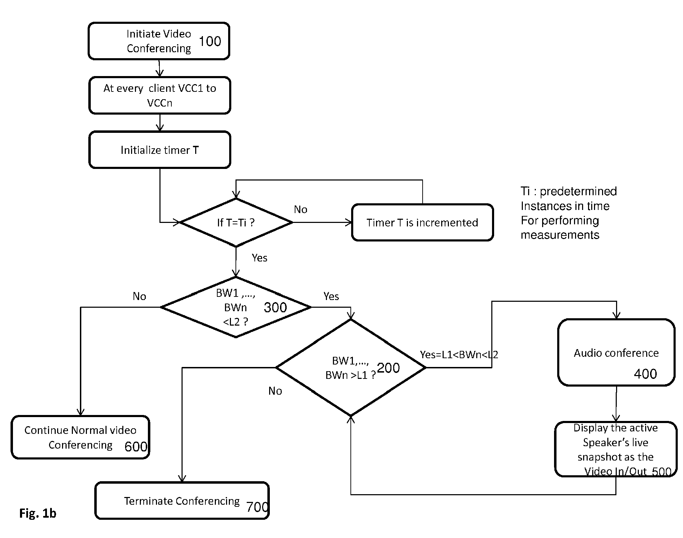

Fig. 1b-c show some implementations of the method where the bandwidth is measured, communicated and compared at predetermined timing instances Ti.

In the claims hereof any element expressed as a means for performing a specified function is intended to encompass any way of performing that function. This may include, for example, a) a combination of electrical or mechanical elements which performs that function or b) software in any form, including, therefore, firmware, microcode or the like, combined with appropriate circuitry for executing that software to perform the function, as well as mechanical elements coupled to software controlled circuitry, if any. The invention as defined by such claims resides in the fact that the functionalities provided by the various recited means are combined and brought together in the manner which the claims call for, and unless otherwise specifically so defined, any physical structure is of little or no importance to the novelty of the claimed invention. Applicant thus regards any means which can provide those functionalities as equivalent as those shown herein.

While the principles of the invention have been described above in connection with specific apparatus, it is to be clearly understood that this description is made only by way of example and not as a limitation on the scope of the invention, as defined in the appended claims.

## Claims

1. Multimedia conferencing method between a multimedia conferencing server (S) and a plurality of conferencing clients (VCC1,...,VCCn), said method comprising the steps of
- setting up a video conferencing session between said conferencing server (S) and said plurality of conferencing clients (VCC1, VCC2, ...,VCCn)
- measuring the bandwidth (B1i, B2i, ...,Bni) of the respective connections (C1,C2, ...,Cn) between the conferencing server (S) and the respective conferencing clients (VCC1, VCC2, ...,VCCn),
- comparing the respective measured bandwidths (B1i, B2i, ...,Bni) between the respective conferencing clients (VCC1, VCC2, ..., VCCn) and said conferencing server (S) with first and second predetermined limits (L1, L2), with said second predetermined limit (L2) being higher than the first predetermined limit, such that
- if, for a conferencing client (VCC2) the respective measured bandwidth (B2i) is lower than said first predetermined limit (L1), the video conferencing session between said conferencing client (VCC2) and said conferencing server is interrupted,
- if, for a conferencing client (VCC2) the respective measured bandwidth (B2i) is higher than said second predetermined limit (L2), the video conferencing session between said conferencing client (VCC2) and said conferencing server is maintained or re-established and ,
- if for a conferencing client (VCC2) the measured respective bandwidth (B2i) is lying between said predetermined limits, said conferencing client (VCC2) will only transmit a still image taken from the captured video stream (V2) at said video conferencing client together with audio to said conferencing server (S).

2. Method according to claim 1 whereby said respective bandwidths are measured continuously.

3. Method according to claim 1 whereby said respective bandwidth are measured at predetermined sequences in time.

4. Method according to claim 3 wherein said predetermined instances in time are equidistant.

5. Method according to any of the previous claims wherein said respective measured bandwidths are the minimum of the upstream measured and downstream measured bandwidths.

6. Multimedia conferencing server (S) coupled to a plurality of conferencing clients (VCC1,...,VCCn), said conferencing server being adapted to
- set up a video conferencing session between said conferencing server (S) and said plurality of conferencing clients (VCC1, VCC2, ...,VCCn)
- receive or perform measurements of the bandwidth (B1i, B2i, ...,Bni) of the respective connections (C1,C2, ...,Cn) between the conferencing server (S) and the respective conferencing clients (VCC1, VCC2, ...,VCCn),
- compare the respective measured bandwidths (B1i, B2i, ...,Bni) between the respective conferencing clients (VCC1, VCC2, ..., VCCn) and said conferencing server (S) with first and second predetermined limits (L1, L2), with said second predetermined limit (L2) being higher than the first predetermined limit, such that
- if, for a conferencing client (VCC2) the respective measured bandwidth (B2i) is lower than said first predetermined limit (L1), the conferencing server is adapted to interrupt the video conferencing session between said conferencing client (VCC2) and said conferencing server,
- if, for a conferencing client (VCC2) the respective measured bandwidth (B2i) is higher than said second predetermined limit (L1), the conferencing server is adapted to maintain or re-establish the video conferencing session between said conferencing client (VCC2) and said conferencing server,
- if for a conferencing client (VCC2) the measured respective bandwidth (B2i) is lying between said predetermined limits, said conferencing server is adapted to instruct said client (VCC2) to only transmit a still image taken from the captured video stream (V2) at said conferencing client together with audio to said conferencing server (S).

7. Server according to claim 6 adapted to receive or perform said measurements continuously.

8. Server according to claim 6 adapted to receive or perform said measurements at predetermined sequences in time.

9. Server according to claim 8 wherein said predetermined instances in time are equidistant.

10. Server according to any of the previous claims 6-9 wherein said respective measured bandwidths are the minimum of the upstream measured and downstream measured bandwidths.

11. Computer program adapted to perform the steps of the method as set out in any of the claims 1-5.
